# EUROPEAN PATENT APPLICATION

(11) **EP 3 896 614 A2**
(43) Date of publication of application: **20.10.2021**
(21) Application number: 21193116.7
(22) Date of filing: 25.08.2021
(51) Int. Cl.: G06K 9/62, G10L 15/00, G06F 9/00, G06N 20/00

(54) **METHOD AND APPARATUS FOR LABELING DATA**

(30) Priority: 25.03.2021 CN 202110319793
(71) Applicant: BEIJING BAIDU NETCOM SCIENCE AND TECHNOLOGY CO. LTD., 100085 Beijing (CN)
(72) Inventor: YANG, Xue, Beijing, 100085 (CN)
(74) Representative: Lucke, Andreas

(57) **Abstract**

The present disclosure provides a method and apparatus for labeling data, and relates to the technical fields of image labeling and deep learning. A specific implementation includes: acquiring to-be-labeled data and a labeling requirement for the to-be-labeled data; determining a labeling method type meeting the labeling requirement, where the labeling method type is a labeling method type used for the to-be-labeled data in order to meet the labeling requirement; generating a labeling title matching the labeling method type according to the labeling requirement, where the labeling title is used to prompt a labeling content in a labeling tool; and generating the labeling tool including the to-be-labeled data, the labeling title and a title logical relationship. The present disclosure can determine labeling method types for different to-be-labeled data and labeling requirements, thereby finding appropriate evaluation methods for the labeling requirements, and automatically and flexibly customizing labeling tools matching specific labeling requirement scenarios.

## Description

### TECHNICAL FIELD

The present disclosure relates to the field of computer technology, specifically to the technical fields of data labeling and deep learning, and in particular to a method and apparatus for labeling data.

### BACKGROUND

In recent years, with the gradual implementation of artificial intelligence algorithms, the demand for data labeling has been increasing unprecedentedly, which has brought the booming development of labeling services. In order to meet increasing various labeling needs, different labelers are needed.

In relevant technology, labeling tools, such as picture labeling tool that can support picture frames, are correspondingly customizedly developed for different labeling scenarios, such as pictures and voices. Developing different labeling tools wastes a lot of manpower and material resources.

### SUMMARY

A method and apparatus for labeling data, an electronic device and a storage medium are provided.

According to a first aspect, a method for labeling data is provided, and the method includes: acquiring to-be-labeled data and a labeling requirement for the to-be-labeled data; determining a labeling method type meeting the labeling requirement, where the labeling method type is a type of a method for labeling the to-be-labeled data meet the labeling requirement; generating a labeling title matching the labeling method type according to the labeling requirement, where the labeling title is used to prompt a labeling content in a labeling tool; and determining a title logical relationship of the labeling title to generate the labeling tool including the to-be-labeled data, the labeling title and the title logical relationship.

According to a second aspect, an apparatus for labeling data is provided, and the apparatus includes: an acquisition unit configured to acquire to-be-labeled data and a labeling requirement for the to-be-labeled data; a determination unit configured to determine a labeling method type meeting the labeling requirement, where the labeling method type is a type of a method for labeling the to-be-labeled data to meet the labeling requirement; a title generation unit configured to generate a labeling title matching the labeling method type according to the labeling requirement, where the labeling title is used to prompt a labeling content in a labeling tool; and a tool generation unit configured to determine a title logical relationship of the labeling title to generate the labeling tool including the to-be-labeled data, the labeling title and the title logical relationship.

According to a third aspect, an electronic device is provided, and includes: at least one processor; and a memory communicatively connected to the at least one processor, where the memory stores instructions executable by the at least one processor, and the instructions, when executed by the at least one processor, cause the at least one processor to execute the method as described in any of the implementations of the first aspect.

According to a fourth aspect, a non-transitory computer-readable storage medium storing computer instructions is provided, where the computer instructions cause a computer to execute the method as described in any of the implementations of the first aspect.

According to a fifth aspect, a computer program product including a computer program is provided, where the computer program, when executed by a processor, implements the method as described in any of the implementations of the first aspect.

Solutions of the present disclosure can determine labeling method types for different to-be-labeled data and labeling requirements, thereby finding appropriate evaluation methods for the labeling requirements, and automatically and flexibly customizing labeling tools matching specific labeling requirement scenarios.

### BRIEF DESCRIPTION OF THE DRAWINGS

By reading the detailed description of non-limiting embodiments with reference to the following accompanying drawings, other features, objects and advantages of the present disclosure will become more apparent.
Fig. 1 is an example system architecture diagram to which some embodiments of the present disclosure may be applied;
Fig. 2 is a flowchart of an embodiment of a method for labeling data according to the present disclosure;
Fig. 3 is a schematic diagram of an application scenario of the method for labeling data according to the present disclosure;
Fig. 4a is a flowchart of another embodiment of the method for labeling data according to the present disclosure;
Fig. 4b is a schematic diagram of a labeling content of a correction title of the method for labeling data according to the present disclosure;
Fig. 4c is a schematic diagram of a labeling tool obtained by the method for labeling data according to the present disclosure in which a labeling method type of to-be-labeled data is a transcription type;
Fig. 4d is a schematic diagram of another labeling tool obtained by the method for labeling data according to the present disclosure in which a labeling method type of to-be-labeled data is the transcription type;
Fig. 5a is a schematic structural diagram of an embodiment of an apparatus for labeling data according to the present disclosure;
Fig. 5b is a schematic structural diagram of another embodiment of the apparatus for labeling data according to the present disclosure; and
Fig. 6 is a block diagram of an electronic device adapted to implement the method for labeling data according to embodiments of the present disclosure.

### DETAILED DESCRIPTION OF EMBODIMENTS

Example embodiments of the present disclosure are described below in combination with the accompanying drawings, where various details of embodiments of the present disclosure are included to facilitate understanding and should be considered as examples only. Therefore, those of ordinary skill in the art should realize that various changes and modifications maybe made to the embodiments described herein without departing from the scope and spirit of the present disclosure. Similarly, for clarity and conciseness, descriptions of well-know functions and structures are omitted in the following description.

It should be noted that the embodiments in the present disclosure and the features in the embodiments may be combined with each other on a non-conflict basis. The present disclosure will be described below in detail with reference to the accompanying drawings and in combination with the embodiments.

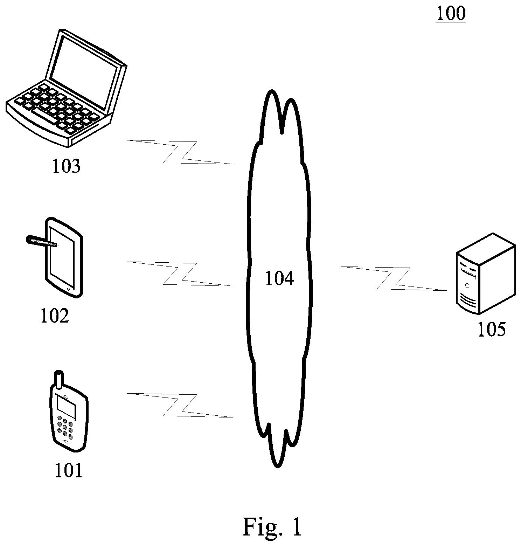

Fig. 1 shows an example system architecture 100 to which an embodiment of a method for labeling data or an apparatus for labeling data according to the present disclosure may be applied.

As shown in Fig. 1, the system architecture 100 may include terminal devices 101, 102, 103, a network 104 and a server 105. The network 104 serves as a medium for providing a communication link between the terminal devices 101, 102, 103 and the server 105. The network 104 may include various types of connections, such as wired or wireless communication links, or optical fiber cables.

A user may use the terminal devices 101, 102, 103 to interact with the server 105 through the network 104 to receive or send messages. Various communication client applications, such as video applications, live broadcast applications, instant messaging tools, email clients and social platform software, may be installed on the terminal devices 101, 102, 103.

The terminal devices 101, 102, 103 may be hardware or software. When the terminal devices 101, 102, 103 are hardware, the terminal devices 101, 102, 103 maybe various electronic devices having a display screen, including but not limited to, a smart phone, a tablet computer, an electronic book reader, a laptop portable computer and a desktop computer; and when the terminal devices 101, 102, 103 are software, the terminal devices 101, 102, 103 may be installed in the electronic devices, and may be implemented as multiple software pieces or software modules (such as multiple software pieces or software modules configured to provide distributed services), or as a single software piece or software module, which is not specifically limited herein.

The server 105 may be a server providing various services, such as a background server providing support for the terminal devices 101, 102, 103. The background server may perform processing (such as analysis) on data (such as to-be-labeled data), and feed back a processing result (such as a labeling tool) to the terminal devices 101, 102, 103.

It should be noted that the method for labeling data provided by embodiments of the present disclosure is generally executed by the server 105 or the terminal devices 101, 102, 103. Correspondingly, the apparatus for labeling data is generally provided in the server 105 or the terminal devices 101, 102, 103.

It should be appreciated that the number of the terminal devices, the network, the server in Fig. 1 is merely illustrative. Any number of terminal devices, networks, and servers may be provided according to actual requirements.

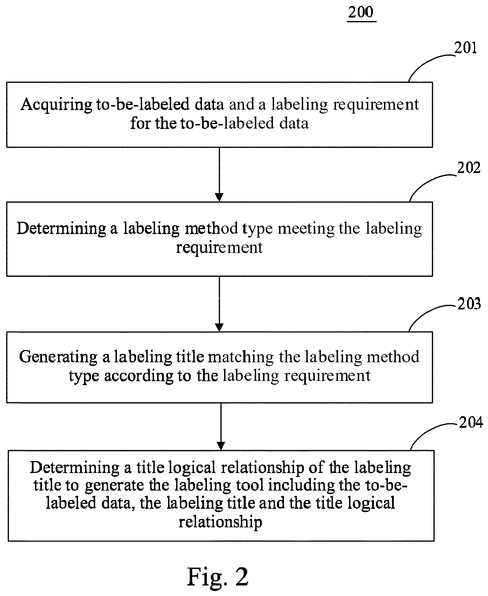

Further referring to Fig. 2, a flow 200 of an embodiment of the method for labeling data according to the present disclosure. The method for labeling data includes steps 201 to 204.

Step 201 includes acquiring to-be-labeled data and a labeling requirement for the to-be-labeled data.

In this embodiment, an execution body executing the method for labeling data (such as the server or the terminal devices shown in Fig. 1) may acquire the to-be-labeled data and the labeling requirement for the to-be-labeled data. The labeling requirement refers to the to-be-labeled data needing to be labeled, i.e., an objective to be achieved by labeling.

Specifically, a type of the to-be-labeled data, i.e., a type of to-be-labeled data may include a picture, an audio, a video, a text, a point cloud and a web page, that is, all this data can be labeled. Specifically, the number of pieces of the to-be-labeled data may be one or at least two, such as 10 pictures.

Step 202 includes determining a labeling method type meeting the labeling requirement, where the labeling method type is a type of a method for labelling the to-be-labeled data to meet the labeling requirement.

In this embodiment, the execution body may determine the labeling method type meeting the labeling requirement, where the labeling method type is the type of the method for labelling the to-be-labeled data to meet the labeling requirement. For example, the labeling method type is an extraction type, and a labeling method included in the extraction type may include audio interception, picture interception and the like.

In practice, the execution body may determine the labeling method type meeting the labeling requirement in various ways. For example, the execution body may acquire a mapping relationship (i.e., a corresponding relationship table) between labeling requirements and labeling method types, and search for the labeling method type to which the labeling requirement is mapped. In addition, the execution body may input the labeling requirement into a predetermined model, and obtain the labeling method type output from the predetermined model. The predetermined model may be configured to determine (i.e., predict) a labeling method type based on a labeling requirement.

Alternatively, the execution body may acquire the to-be-labeled data type, and then determine the labeling method type based on both of the to-be-labeled data type and the labeling requirement. For example, the execution body may input the labeling requirement and the to-be-labeled data type into a preset model, and obtain the labeling method type output from the preset model. The preset model maybe configured to determine (i.e., predict) a labeling method type based on a labeling requirement and a to-be-labeled data type. In addition, the execution body may acquire a mapping relationship between the combinations of to-be-labeled data types and labeling requirements, and labeling method types, to determine the labeling method type meeting the acquired labeling requirement.

Step 203 includes generating a labeling title matching the labeling method type according to the labeling requirement, where the labeling title is used to prompt a labeling content in a labeling tool.

In this embodiment, the execution body may generate the labeling title matching the labeling method type according to the labeling requirement. In practice, the execution body may generate the labeling title matching the labeling method type in various ways. For example, the execution body may input the labeling requirement and the labeling method type into a specified model, and obtain the labeling title output from the specified model. The specified model is configured to determine (i.e., predict) a labeling title matching a labeling method type based on a labeling requirement and the labeling method type. For another example, the execution body may acquire a mapping relationship between the combinations of labeling requirements and labeling method types, and labeling titles, and search for the labeling title to which the labeling requirement and the labeling method type are mapped.

Any one of the predetermined model, the preset model and the specified model may be various formulas, algorithms, deep neural networks or the like.

Specifically, the labeling title is used to prompt (i.e., prompt a labeller with) a labeling content in a labeling tool. For example, the labeling title is "is the picture clear" and two options of "yes" and "no". The labeling title can be used to prompt that the labeling contents are "the picture is clear" and "the picture is unclear" respectively corresponding to the options "yes" and "no".

Step 204 includes determining a title logical relationship of the labeling title to generate the labeling tool including the to-be-labeled data, the labeling title and the title logical relationship.

In this embodiment, the execution body may generate the labeling tool. Specifically, the labeling tool includes the to-be-labeled data and the labeling title. The labeling tool may be used to prompt a labeler with the labeling content, i.e., a content needing to be labeled, so that the labeler can label the to-be-labeled data by using the labeling tool.

The title logical relationship refers to a logical relationship between the labeling titles. In a case of one labeling title, a determined title logical relationship is an empty value, and in a case of at least two labeling titles, a determined title logical relationship is a relationship between the labeling titles. Specifically, the title logical relationship may be determined in various ways, for example, may be determined according to labeling method types respectively corresponding to labeling titles, and a corresponding relationship (such as a corresponding relationship table or model) preset for the labeling method types respectively corresponding to the labeling titles. The corresponding relationship may indicate a corresponding relationship between title logical relationships and the labeling method types respectively corresponding to the labeling titles.

The title logical relationship may be various, such as a labeling order. The labeling order refers to an order of displaying labeling titles, and meanwhile is an order of labeling the labeling titles by the labeller, and an order of generating labeling contents of the labeling titles.

The method according to embodiments of the present disclosure can determine labeling method types for different to-be-labeled data and labeling requirements, thereby finding appropriate evaluation methods for the labeling requirements, and automatically and flexibly customizing labeling tools matching specific labeling requirement scenarios.

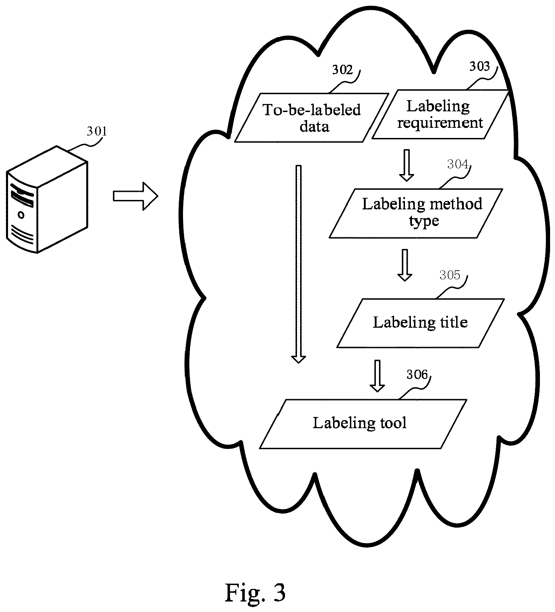

Further referring to Fig. 3, Fig. 3 is a schematic diagram of an application scenario of the method for labeling data according to the present disclosure. In the application scenario of Fig. 3, an execution body 301 acquires to-be-labeled data 302 and a labeling requirement 303 for the to-be-labeled data, and determines a labeling method type 304 meeting the labeling requirement 303 according to the labeling requirement 303, where the labeling method type is a type of a method for labeling the to-be-labeled data to meet the labeling requirement. The execution body 301 generates a labeling title 305 matching the labeling method type 304 according to the labeling requirement 303, where the labeling title 305 is used to prompt a labeling content in a labeling tool, and determines a title logical relationship of the labeling title to generate the labeling tool 306 including the to-be-labeled data 301, the labeling title 305 and the title logical relationship.

In some alternative implementations of any of embodiments of the present disclosure, the labeling method type includes a necessary labeling method type, or the labeling method type includes the necessary labeling method type and an additional labeling method type.

In these alternative implementations, the labeling method type meeting each labeling requirement may be at least one, i.e., may be one or at least two. The necessary labeling method type refers to a labeling method type that is necessary and directly indicated by the labeling requirement. The additional labeling method type is a labeling method type for improving a labeling effect to obtain a better training sample.

For example, the labeling requirement is to label an obstacle in a picture, then the necessary labeling method type may be an extraction type including labeling a target frame in the picture. Because an ultimate purpose of labeling is to generate a sample for training a model, if a picture is very blurry, the picture cannot be used as a sample for training. Therefore, a cleaning type including filtering a picture (i.e., screening a picture) may be used as the additional labeling method type, so that a picture with a low resolution (for example, below a threshold) may be filtered out first. That is, if a resolution of a picture is low, the picture is filtered out and no longer labeled with a labeling title of the extraction type.

These implementations may use the necessary labeling method type and additional labeling method type to achieve a more comprehensive and accurate labeling process, thereby generating an accurate training sample.

In some alternative application scenarios of these implementations, at least one labeling method type includes the necessary labeling method type and the additional labeling method type. The determining a title logical relationship of the labeling title to generate the labeling tool including the to-be-labeled data and the labeling title, includes: determining the title logical relationship of labeling titles respectively corresponding to the necessary labeling method type and the additional labeling method type, where the title logical relationship includes at least one of a labeling order or a display restriction relationship; and generating the labeling tool including the to-be-labeled data, the labeling titles and the title logical relationship.

In these application scenarios, the title logical relationship may be alternatively included in the labeling tool. The execution body may determine the title logical relationship of labeling titles respectively corresponding to different labeling method types. The title logical relationship of the labeling titles respectively corresponding to the different labeling method types may be preset or may be determined in real time by a model (such as a pretrained deep neural network). A labeling title corresponding to a labeling method type refers to the labeling title matching the labeling method type.

The display restriction relationship means that a labeling content of a previous labeling title affects a display state of a posterior labeling title to be labeled after the previous labeling title. The display state indicates whether a user (i.e., a labeler) can operate the labeling title.

These alternative application scenarios can add the title logical relationship in the labeling tool, thereby avoiding invalid labeling or labeling with a poor effect, and improving labeling efficiency and labeling accuracy.

Alternatively, the necessary labeling method type and the additional labeling method type are the extraction type and the cleaning type respectively, and the title logical relationship includes the labeling order and the display restriction relationship, and the labeling order indicates that after a labeling content of the labeling title of the cleaning type is received, a labeling operation of the labeling title of the extraction type is received. A display process of the labeling tool includes: determining, in response to receiving a labeling operation on the labeling title corresponding to the cleaning type in the labeling tool, the labeling content of the labeling operation, and determining a display state of the labeling title corresponding to the extraction type based on the display restriction relationship and the labeling content, where the display state is an operable display state or an inoperable display state; displaying, in response to the determined display state being the operable display state, the labeling title corresponding to the extraction type in an operable state; or displaying, in response to the determined display state being the inoperable display state, the labeling title corresponding to the extraction type in an inoperable display state, or disabling displaying the labeling title corresponding to the extraction type.

Specifically, a labeling order indicates that the labeler first performs a labeling operation on the labeling title of the cleaning type, and then performs a labeling operation on the labeling title of the extraction type. Taking a picture as an example, the display restriction relationship indicates that if a labeling content of a labeling title corresponding to the cleaning type indicates a low resolution of the picture, a display state of a labeling title corresponding to the extraction type is in an inoperable display state. The labeling order indicates that before the labeling content of the labeling title of the cleaning type is received, the labeling operation on the labeling title of the extraction type is disabled. The labeling operation is disabled, which means that an electronic device cannot receive the labeling operation, such that the user cannot perform the labeling operation on the labeling title.

A labeling title displayed in an inoperable state may show a characteristic of being non-operable by the user. For example, displaying a labeling title in an inoperable state may be dimming a color depth of the labeling title, or labeling a text, such as "unavailable".

These alternative application scenarios can guide the labeling operations of the labeler through the title logical relationship, and effectively restrict the operation by displaying, thereby avoiding the labeler from performing invalid labeling or labeling with a poor effect.

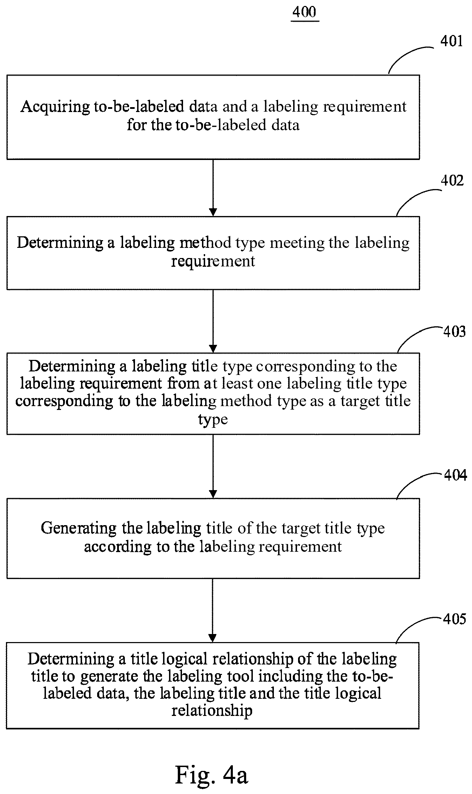

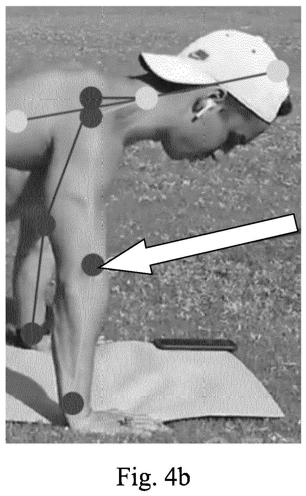

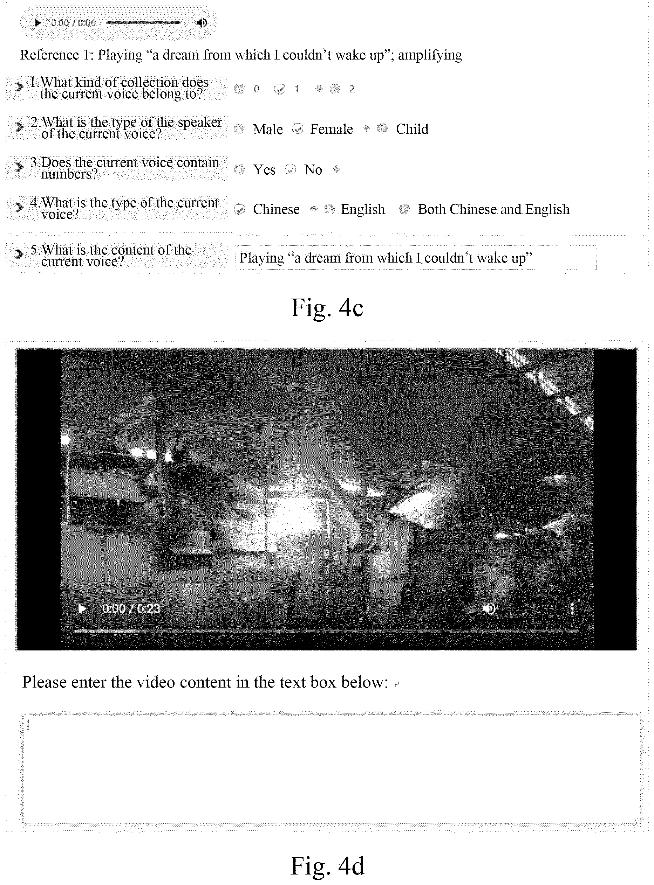

Further referring to Fig. 4, Fig. 4 is a flow 400 of another embodiment of the method for labeling data, and the flow 400 includes step 401 to 405.

Step 401 includes acquiring to-be-labeled data and a labeling requirement for the to-be-labeled data.

In this embodiment, an execution body executing the method for labeling data (such as the server or the terminal devices shown in Fig. 1) may acquire the to-be-labeled data and the labeling requirement for the to-be-labeled data. The labeling requirement refers to that the to-be-labeled data needs to be labeled, i.e., an objective to be achieved by the labeling.

Step 402 includes determining a labeling method type meeting the labeling requirement, where the labeling method type is a type of a method for labeling the to-be-labeled data to meet the labeling requirement.

In this embodiment, the execution body may determine the labeling method type meeting the labeling requirement, where the labeling method type is a type of a method for labeling the to-be-labeled data to meet the labeling requirement. For example, the labeling method type is an extraction type, and a labeling method included in the extraction type may include audio interception, picture interception and the like.

Step 403 includes determining a labeling title type corresponding to the labeling requirement from at least one labeling title type corresponding to the labeling method type as a target title type.

In this embodiment, the execution body may determine the labeling title type (such as a labeling title type) from the at least one labeling title type corresponding to the labeling method type according to the labeling requirement as the target title type.

In practice, each labeling method type corresponds to at least one labeling title type. For example, if a labeling method type is the cleaning type, a labeling title type may include an option selection type and a drop-down box selection type. The option selection type may include a single selection from options and multiple selections from options, and the drop-down box selection type may include a single selection from options of a drop-down box and multiple selections from options of the drop-down box. Therefore, the labeling title type may correspond to four title types of a single selection from options, multiple selections from options, a single selection from options of a drop-down box, and multiple selections from options of a drop-down box.

The execution body may determine the labeling title type corresponding to the labeling requirement from the at least one labeling title type as the target title type. For example, there are four title types, which are a single selection from options, multiple selections from options, a single selection from options of a drop-down box, and multiple selections from options of a drop-down box respectively. When the labeling requirement includes "is the picture clear", the execution body may determine that a labeling title type meeting the labeling requirement is the single selection from options.

Alternatively, a target title type may be determined according to a type of the to-be-labeled data. There is a corresponding relationship between types of the to-be-labeled data and target title types. The type of to-be-labeled data may alternatively be acquired from a labeling requirement. In this way, the execution body may comprehensively determine the target title type in combination with the type of the to-be-labeled data and the labeling requirement.

Step 404 includes generating the labeling title of the target title type according to the labeling requirement, where the labeling title is used to prompt a labeling content in a labeling tool.

In this embodiment, the execution body may generate the labeling title of the target title type according to the labeling requirement, i.e., the generated labeling title matches the target title type.

In practice, the execution body may generate the labeling title of the target title type in various ways according to the labeling requirement. For example, the execution body may input the labeling requirement and the target title type into a predetermined model, and obtain the labeling title output from the predetermined model. The predetermined model may be configured to determine (i.e., predict) a labeling title based on a labeling requirement and a target title type. In addition, the execution body may acquire a mapping relationship between labeling requirements and candidate labeling titles, and search for a candidate labeling title to which the acquired labeling requirement is mapped in the mapping relationship, thereby finding the labeling title matching the target title type.

Step 405 includes determining a title logical relationship of the labeling title to generate the labeling tool including the to-be-labeled data, the labeling title and the title logical relationship.

In this embodiment, the execution body may generate the labeling tool. Specifically, the labeling tool includes the to-be-labeled data, the labeling title and the title logical relationship. The labeling tool may be used to prompt a labeler with the labeling content, i.e., a content for labeling, so that the labeler can label the to-be-labeled data by using the labeling tool.

This embodiment may determine the type of the labeling title according to the labeling requirement, and generate the labeling title matching the type, thereby improving accuracy of the generated labeling title.

In some alternative implementations of this embodiment, the generating the labeling title of the target title type according to the labeling requirement, includes: generating, in response to the labeling requirement being a preset correction requirement, the labeling title of the target title type and a correction title corresponding to the correction requirement, where a labeling content of the correction title is used to adjust the labeling content of the labeling title.

In theses alternative implementations, when the labeling requirement is the preset correction requirement, the execution body may generate not only the labeling title of the target title type but also the correction title corresponding to the correction requirement, i.e., a labeling title for correction. After a labeling content of the correction title and a labeling content of the labeling title are determined, the user (i.e., the labeler) may use the labeling content of the correction title to adjust the labeling content of the labeling title.

For example, as shown in Fig. 4B, a key point pointed by an arrow in the figure is the labeling content of the labeling title. Connection lines (auxiliary lines) of three key points in which the pointed key point is an intermediate point, is the labeling content of the correction title. An angle between the lines interacting at the pointed key point is greater than 180°, and exceeds a preset angle threshold corresponding to the key point. As such, a position of the key point may be adjusted so that the angle is less than or equal to 180°.

The correction title may be directly generated by the correction requirement, for example, may be generated by inputting the correction requirement into a pretrained model or through a preset mapping relationship. Alternatively, the correction title may be generated by using another parameter. The another parameter may include the target title type.

These implementations may adjust the labeling content of the labeling title through the labeling content for correction, thereby improving labeling accuracy.

Specifically, the determining the labeling method type meeting the labeling requirement in the step 402 may include: determining, in response to the labeling requirement including a to-be-labeled data filtering, that the labeling method type of the to-be-labeled data is the cleaning type, where the cleaning type is used to indicate whether the to-be-labeled data is data to be filtered out, or to indicate partial data to be filtered out in the to-be-labeled data; determining, in response to the labeling requirement including a labeled data transcription, that the labeling method type of the to-be-labeled data is a transcription type; determining, in response to the labeling requirement including a labeled data acquisition, that the labeling method type of the to-be-labeled data is an enrichment type; and determining, in response to the labeling requirement including a labeled data extraction, that the labeling method type of the to-be-labeled data is the extraction type.

The step 403 may include: acquiring, in response to determining that the labeling method type is a target type, at least two labeling title types corresponding to the labeling method type; and determining, in response to determining that the labeling requirement is a preset requirement, a title type corresponding to the preset requirement as a target title type.

In response to the target type being the cleaning type, when the preset requirement is a direct selection requirement, the target title type is an option selection type, or when the preset requirement is a fuzzy search requirement, the target title type is a drop-down box selection type; in response to the target type being the transcription type, when the preset requirement is a little-content transcription requirement, the target title type is a single-line text title, or when the preset requirement is a much-content transcription requirement, the target title type is a multi-line text title; and in response to the target type being the enrichment type, when the preset requirement is a little-content transcription requirement, the target title type is a single-line text title, and when the preset requirement is a multi-content transcription requirement, the target title type is a multi-line text title.

In some alternative implementations of this embodiment, the determining the labeling method type meeting the labeling requirement in the step 402 may include: determining, in response to the labeling requirement including the to-be-labeled data filtering, that the labeling method type of the to-be-labeled data is the cleaning type, where the cleaning type is used to indicate determining whether the to-be-labeled data is data to be filtered out, or to indicate determining partial data to be filtered out in the to-be-labeled data.

In these alternative implementations, the execution body may determine that the labeling method type of the to-be-labeled data is the cleaning type, when the labeling requirement includes the to-be-labeled data filtering. Specifically, a to-be-labeled data type whose labeling method type may be the cleaning type may include a picture, a text, a video, an audio, a web page and a point cloud (i.e., point cloud information, such as a point cloud picture).

The to-be-labeled data filtering, i.e., data cleaning, indicates that a purpose of the labeler is to determine whether the to-be-labeled data is the data to be filtered out, or indicates determining the partial data to be filtered out in the to-be-labeled data. To be filtered out means to be removed or deleted.

For example, the cleaning may indicate that the labeler labels pictures with "clear" or "unclear", and filters out the clear picture or the unclear picture based on a labeling requirement. Alternatively, the cleaning may indicate that the labeler labels a sentence involving a bloody content in a text, and filters out the sentence.

These implementations may accurately determine the labeling method type of the cleaning type through specific information of the labeling requirement.

Alternatively, the step 403 may include: acquiring, in response to determining that the labeling method type is the cleaning type, at least two labeling title types corresponding to the labeling method type; determining, in response to determining that the to-be-labeled data filtering is a direct selection requirement, an option selection type from the at least two labeling title types as a target title type; and determining, in response to determining that the to-be-labeled data filtering is a fuzzy search requirement, a drop-down box selection type from the at least two labeling title types as the target title type.

Specifically, when the labeling method type is the cleaning type, the labeling method type may correspond to at least two labeling title types, such as a single selection from options, multiple selections from options, a single selection from options of a drop-down box, and multiple selections from options of a drop-down box.

If the to-be-labeled data filtering, which is the labeling requirement, is the direct selection requirement indicating that the labeler is required to directly select an answer from options, the execution body may determine the option selection type from the at least two labeling title types as the target title type. If the to-be-labeled data filtering, which is the labeling requirement, is the fuzzy search requirement indicating that the labeler is required to perform a fuzzy search, the execution body may determine the drop-down box selection type from the at least two labeling title types as the target title type.

The fuzzy search may indicate that there is a category displayed in an original box (i.e., a box that is above a drop-down box and connected to the drop-down box) corresponding to the drop-down box, and objects of this category is displayed in the drop-down box. For example, the original box displays "mineral water", and the drop-down box displays "mineral water of brand A", "mineral water of brand B" and "mineral water of brand C", which may be selected by the labeler.

In these alternative implementations, different labeling title types may be determined as the target title types, when the labeling requirements indicate the direct selection requirement and the fuzzy search requirement respectively.

In some alternative implementations of this embodiment, the determining the labeling method type meeting the labeling requirement in the step 402 may include: determining, in response to the labeling requirement including a labeled data transcription, that the labeling method type of the to-be-labeled data is a transcription type.

In these alternative implementations, the execution body may determine that the labeling method type of the to-be-labeled data is the transcription type, when the labeling requirement includes the labeled data transcription. Specifically, a to-be-labeled data type whose labeling method type may be the transcription type may include a picture, a text, a video, an audio and a web page.

The transcription refers to converting non-text data into a text. Specifically, the transcription may be an audio transcription, a video transcription, a picture content transcription, a text content transcription, or a web page content transcription.

These implementations may accurately determine the labeling method type of the transcription type through specific information of the labeling requirement.

Alternatively, the step 403 may include: acquiring, in response to determining that the labeling method type is the transcription type, at least two labeling title types corresponding to the labeling method type; determining, in response to determining that the labeled data transcription is a little-content transcription requirement, a single-line text title from the at least two labeling title types as a target title type; and determining, in response to determining that the labeled data transcription is a much-content transcription requirement, a multi-line text title from the at least two labeling title types as the target title type.

Specifically, when the labeling method type is the transcription type, the at least two labeling title types corresponding to the labeling method type may include the single-line text title and the multi-line text title. The execution body may determine the labeled data transcription included in the labelling requirement is the little-content transcription or the much-content transcription.

The execution body may acquire a threshold set for a length value (such as the number of words, the number of characters and the number of lines) of a transcribed text of the to-be-labeled data. If the length value of the transcribed text of the to-be-labeled data does not exceed the threshold, it can be determined that the labeled data transcription is the little-content transcription requirement. If the length value of the transcribed text of the to-be-labeled data exceeds the threshold, it can be determined that the labeled data transcription is the much-content transcription requirement. In addition, the execution body may input the length value of the transcribed text of the to-be-labeled data into a model or a formula, and obtain a result calculated by the model or the formula. The result may directly indicate that the labeled data transcription is the little-content transcription requirement or the much-content transcription requirement.

The single-line text title refers to displaying a transcription result with a single-line text, as shown in Fig. 4c. The figure shows that the to-be-labeled data is an audio, and generated labeling titles are four single-selection titles and one single-line text title.

The multi-line text title refers to displaying a transcription result with a multi-line text title, as shown in Fig. 4d. The figure shows that the to-be-labeled data is a video, and a generated labeling title is a multi-line text title.

In these alternative implementations, the different labeling title types may be determined targetedly as the target title types, when the transcription requirement indicates the less-content transcription requirement and the multi-content transcription requirement respectively.

In some alternative implementations of this embodiment, the determining the labeling method type meeting the labeling requirement in the step 402 may include: determining, in response to the labeling requirement including a labeled data acquisition, that the labeling method type of the to-be-labeled data is an enrichment type.

In these alternative implementations, the execution body may determine that the labeling method type of the to-be-labeled data is the enrichment type, when the labeling requirement includes the labeled data acquisition. When the labeling method type is the enrichment type, a to-be-labeled data type may be a text.

The enrichment refers to a text acquisition in scenarios of a human-human dialogue and a human-machine dialogue.

These implementations may accurately determine the labeling method type of the enrichment type through specific information of the labeling requirement.

Alternatively, the step 403 may include: acquiring, in response to determining that the labeling method type is the enrichment type, at least two labeling title types corresponding to the labeling method type; determining, in response to determining that the labeled data acquisition is a little-content enrichment requirement, a single-line text title from the at least two labeling title types as a target title type; and determining, in response to determining that the labeled data acquisition is a much-content enrichment requirement, a multi-line text title from the at least two labeling title types as the target title type.

Specifically, the execution body may acquire a threshold set for a length value (such as the number of words, the number of characters and the number of lines) of an enriched text of the to-be-labeled data. If the length value of the enriched text of the to-be-labeled data does not exceed the threshold, it can be determined that the labeled data enrichment is the little-content enrichment requirement. If the length value of the enriched text of the to-be-labeled data exceeds the threshold, it can be determined that the labeled data enrichment is the much-content enrichment requirement. In addition, the execution body may input the length value of the enriched text of the to-be-labeled data into a model or a formula, and obtain a result calculated by the model or the formula. The result may directly indicate that the labeled data enrichment is the little-content enrichment requirement or the much-content enrichment requirement.

In these alternative implementations, the different labeling title types may be targetedly determined as the target title types, when the enrichment requirement indicates the little-content enrichment requirement and the much-content enrichment requirement respectively.

In some alternative implementations of this embodiment, the determining the labeling method type meeting the labeling requirement in the step 402 may include: determining, in response to the labeling requirement including a labeled data extraction, that the labeling method type of the to-be-labeled data is the extraction type.

In these alternative implementations, the execution body may determine that the labeling method type of the to-be-labeled data is the extraction type, when the labeling requirement includes the labeled data extraction. Specifically, a to-be-labeled data type whose labeling method type may be the extraction type may include a picture, a text, a video, an audio, a point cloud and a web page.

The extraction refers to a picture extraction, an audio extraction, a video extraction, a text extraction, a point cloud extraction (i.e., a point cloud data extraction) and the like.

Specifically, the picture extraction refers to selecting an object in a picture, the object being required to be "drawn" in the picture. A labeling title for the picture extraction may be designed based on a picture editor. The audio extraction refers to "labeling" a segment (or multiple segments) of an audio during an audio playback. A labeling title for the audio extraction may be designed based on an audio player. A labeling title for the video extraction may be designed based on a video player. A labeling title for the text extraction may be designed based on a text editor, or maybe obtained by circling or touching a text using a brush. A labeling title for the point cloud data extraction may be designed based on a point cloud editor.

These implementations may accurately determine the labeling method type of the extraction type through specific information of the labeling requirement.

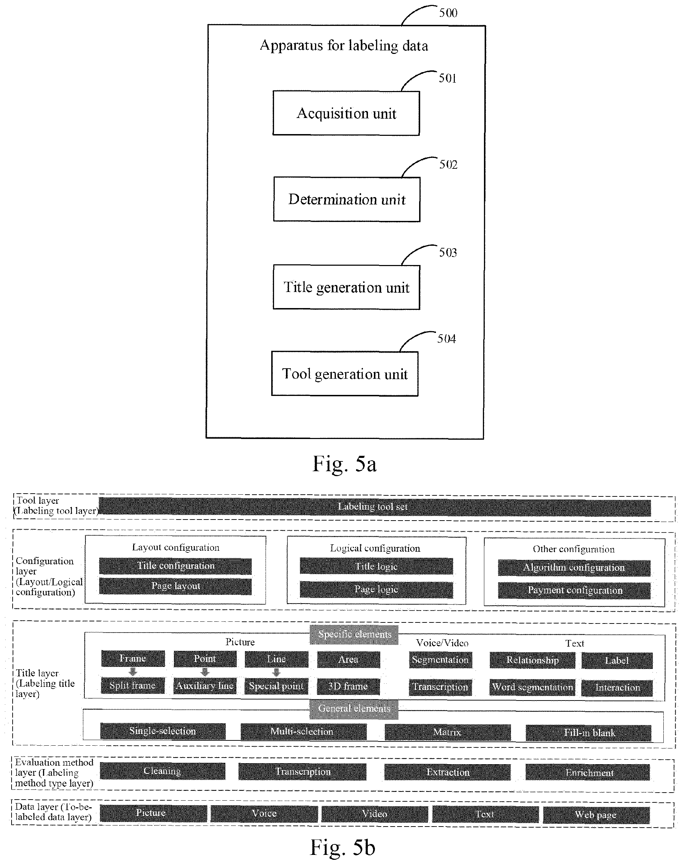

Further referring to Fig. 5a, as an implementation of the method shown in each of the above figures, the present disclosure provides an embodiment of an apparatus for labeling data. The embodiment of the apparatus corresponds to the embodiment of the method shown in Fig. 2. In addition to the features described below, the embodiment of the apparatus may alternatively include the same or corresponding features or effects as the embodiment of the method shown in Fig. 2. The apparatus is particularly applicable to various electronic devices.

As shown in Fig. 5a, the apparatus 500 for labeling data of this embodiment includes: an acquisition unit 501, a determination unit 502, a title generation unit 503 and a tool generation unit 504. The acquisition unit 501 is configured to acquire to-be-labeled data and a labeling requirement for the to-be-labeled data; the determination unit 502 is configured to determine a labeling method type meeting the labeling requirement, where the labeling method type is a labeling method type used for the to-be-labeled data in order to meet the labeling requirement; the title generation unit 503 is configured to generate a labeling title matching the labeling method type according to the labeling requirement, where the labeling title is used to prompt a labeling content in a labeling tool; and a tool generation unit 504 is configured to determine a title logical relationship of the labeling title to generate the labeling tool including the to-be-labeled data, the labeling title and the title logical relationship.

In this embodiment, the specific processing of the acquisition unit 501, the determination unit 502, the title generation unit 503 and the tool generation unit 504 of the apparatus 500 for labeling data and the technical effects thereof may be described with reference to the related description of steps 201 to 204 in the embodiment corresponding to Fig. 2, and are thus not repeated herein.

In some alternative implementations of this embodiment, the labeling method type includes a necessary labeling method type, or the labeling method type includes the necessary labeling method type and an additional labeling method type.

In some alternative implementations of this embodiment, the labeling method type includes the necessary labeling method type and the additional labeling method type; and the tool generation unit is further configured to execute the determining a title logical relationship of the labeling title to generate the labeling tool including the to-be-labeled data, the labeling title and the title logical relationship by: determining the title logical relationship of labeling titles respectively corresponding to the necessary labeling method type and the additional labeling method type, where the title logical relationship includes at least one of a labeling order or a display restriction relationship; and generating the labeling tool including the to-be-labeled data, the labeling titles and the title logical relationship.

In some alternative implementations of this embodiment, the necessary labeling method type and the additional labeling method type are an extraction type and a cleaning type respectively, and the title logical relationship includes the labeling order and the display restriction relationship, and the labeling order indicates after a labeling content of the labeling title of the cleaning type is received, a labeling operation of the labeling title of the extraction type is received; a display process of the labeling tool includes: determining, in response to receiving a labeling operation on the labeling title corresponding to the cleaning type in the labeling tool, the labeling content of the labeling operation, and determining a display state of the labeling title corresponding to the extraction type based on the display restriction relationship and the labeling content, where the display state is an operable display state or an inoperable display state; displaying, in response to the determined display state being the operable display state, the labeling title corresponding to the extraction type in an operable state; or displaying, in response to the determined display state being the inoperable display state, the labeling title corresponding to the extraction type in an inoperable display state, or disabling displaying the labeling title corresponding to the extraction type.

In some alternative implementations of this embodiment, the title generation unit is further configured to execute the generating a labeling title matching the labeling method type according to the labeling requirement by: determining a labeling title type corresponding to the labeling requirement from at least one labeling title type corresponding to the labeling method type as a target title type; and generating the labeling title of the target title type according to the labeling requirement.

In some alternative implementations of this embodiment, the title generation unit is further configured to execute the generating the labeling title of the target title type according to the labeling requirement by: generating, in response to the labeling requirement being a preset correction requirement, the labeling title of the target title type and a correction title corresponding to the correction requirement, where a labeling content of the correction title is used to adjust the labeling content of the labeling title.

In some alternative implementations of this embodiment, the determination unit is further configured to execute the determining a labeling method type meeting the labeling requirement by: determining, in response to the labeling requirement including a to-be-labeled data filtering, that the labeling method type of the to-be-labeled data is the cleaning type, where the cleaning type is used to indicate whether the to-be-labeled data is data to be filtered out, or to indicate partial data to be filtered out in the to-be-labeled data; determining, in response to the labeling requirement including a labeled data transcription, that the labeling method type of the to-be-labeled data is a transcription type; determining, in response to the labeling requirement including a labeled data acquisition, that the labeling method type of the to-be-labeled data is an enrichment type; or determining, in response to the labeling requirement including a labeled data extraction, that the labeling method type of the to-be-labeled data is the extraction type.

In some alternative implementations of this embodiment, the title generation unit is further configured to execute the determining a labeling title type corresponding to the labeling requirement from at least one labeling title type corresponding to the labeling method type as a target title type by: acquiring, in response to determining that the labeling method type is a target type, at least two labeling title types corresponding to the labeling method type; and determining, in response to determining that the labeling requirement is a preset requirement, a title type corresponding to the preset requirement as a target title type.

In some alternative implementations of this embodiment, in response to the target type being the cleaning type, when the preset requirement is a direct selection requirement, the target title type is an option selection type, or when the preset requirement is a fuzzy search requirement, the target title type is a drop-down box selection type; in response to the target type being the transcription type, when the preset requirement is a less-content transcription requirement, the target title type is a single-line text title, or when the preset requirement is a multi-content transcription requirement, the target title type is a multi-line text title; or in response to the target type being the enrichment type, when the preset requirement is a less-content enrichment requirement, the target title type is a single-line text title, or when the preset requirement is a multi-content enrichment requirement, the target title type is a multi-line text title.

As shown in Fig. 5b, the figure shows various processing layers that may exist in the apparatus for labeling data. Specifically, the various processing layers may include a data layer, an evaluation method layer, a title layer, a configuration layer and a tool layer.

The data layer may include various to-be-labeled data types. The evaluation method layer may include various labeling method types. The title layer may include various labeling title types. A general element (a general labeling title type) may include a single-choice, a multiple-choice, a matrix and a fill-in blank, which are labeling title types that may be used for all to-be-labeled data types. The matrix means that multiple subtitles of a title are arranged in a matrix. Specific titles (specific labeling title types) may refer to labeling title types of labeling titles respectively used for different to-be-labeled data types, and may indicate labeling requirements. For example, a labeling requirement of a picture may be labeling "points". For this requirement, a correction title related to an auxiliary line may be used. The configuration layer in the figure indicates a step through which a labeling title generates a labeling tool, and the configuration layer may include a logical configuration (such as a title logical relationship).

According to embodiments of the present disclosure, the present disclosure further provides an electronic device, a readable storage medium and a computer program product.

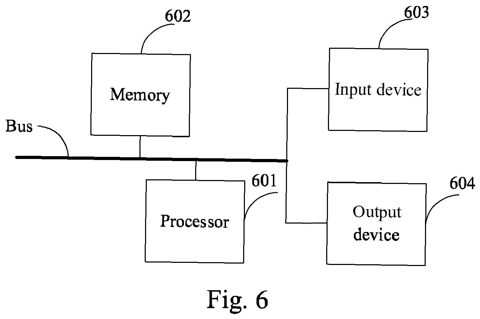

Fig. 6 is a block diagram of an electronic device adapted to implement the method for labeling data according to embodiments of the present disclosure. The electronic device is intended to represent various forms of digital computers, such as laptops, desktops, worktables, personal digital assistants, servers, blade servers, mainframe computers and other suitable computers. The electronic device may also represent various forms of mobile devices, such as personal digital processing, cellular phones, smart phones, wearable devices and other similar computing devices. The parts, their connections and relationships, and their functions shown herein are examples only, and are not intended to limit the implementations of the present disclosure as described and/or claimed herein.

As shown in Fig. 6, the electronic device includes one or more processors 601, a memory 602 and interfaces for connecting components, including a high-speed interface and a low-speed interface. The components are interconnected by using different buses and may be mounted on a common motherboard or otherwise as required. The processor may process instructions executed within the electronic device, including instructions stored in memory or on memory to display graphical information of the GUI on an external input or output device (such as a display device coupled to an interface). In other embodiments, multiple processors and/or multiple buses and multiple memories may be used with multiple memories, if required. Similarly, multiple electronic devices may be connected (for example, used as a server array, a set of blade servers or a multiprocessor system), and the electronic device provides some of the necessary operations. An example of a processor 601 is shown in Fig. 6.

The memory 602 is a non-transitory computer readable storage medium according to the present disclosure. The memory stores instructions executable by at least one processor to cause the at least one processor to execute the method for labeling data according to the present disclosure. The non-transitory computer readable storage medium of the present disclosure stores computer instructions for causing a computer to execute the method for labeling data according to the present disclosure.

As a non-transitory computer readable storage medium, the memory 602 may be used to store non-transitory software programs, non-transitory computer executable programs and modules, such as the program instructions or modules corresponding to the method for labeling data in the embodiment of the present disclosure (for example, the acquisition unit 501, the determination unit 502, the title generation unit 503 and the tool generation unit 504 shown in Fig. 5). The processor 601 runs the non-transitory software programs, instructions and modules stored in the memory 602 to execute various functional applications and data processing of the server, thereby implementing the method for labeling data in the embodiment of the method.

The memory 602 may include a storage program area and a storage data area, where the storage program area may store an operating system and an application program required by at least one function; and the storage data area may store data created by the electronic device when executing the method for labeling data. In addition, the memory 602 may include a high-speed random access memory, and may further include a non-transitory memory, such as at least one magnetic disk storage device, a flash memory or other non-transitory solid state storage devices. In some embodiments, the memory 602 may alternatively include a memory disposed remotely relative to the processor 601, which may be connected through a network to the electronic device adapted to execute the method for labeling data. Examples of such networks include, but are not limited to, the Internet, enterprise intranets, local area networks, mobile communication networks and combinations thereof.

The electronic device adapted to execute the method for labeling data may further include an input device 603 and an output device 604. The processor 601, the memory 602, the input device 603 and the output device 604 may be interconnected through a bus or other means, and an example of a connection through the bus is shown in Fig. 6.

The input device 603 may receive input digit or character information, and generate key signal input related to user settings and functional control of the electronic device adapted to execute the method for labeling data, such as a touch screen, a keypad, a mouse, a track pad, a touch pad, a pointer bar, one or more mouse buttons, a trackball or a joystick. The output device 604 may include a display device, an auxiliary lighting device (such as an LED) and a tactile feedback device (such as a vibration motor). The display device may include, but is not limited to, a liquid crystal display (LCD), a light emitting diode (LED) display and a plasma display. In some embodiments, the display device may be a touch screen.

The various embodiments of the systems and technologies described herein may be implemented in digital electronic circuit systems, integrated circuit systems, ASICs (application specific integrated circuits), computer hardware, firmware, software and/or combinations thereof. The various embodiments may include: being implemented in one or more computer programs, where the one or more computer programs may be executed and/or interpreted on a programmable system including at least one programmable processor, and the programmable processor may be a dedicated or general-purpose programmable processor, which may receive data and instructions from a memory system, at least one input device and at least one output device, and send the data and instructions to the memory system, the at least one input device and the at least one output device.

These computing programs (also known as programs, software, software applications or code) include machine instructions of a programmable processor and may be implemented in high-level procedures and/or object-oriented programming languages, and/or assembly or machine languages. As used herein, the terms "machine readable medium" and "computer readable medium" refer to any computer program product, device and/or apparatus (such as magnetic disk, optical disk, memory and programmable logic device (PLD)) for providing machine instructions and/or data to a programmable processor, including a machine readable medium that receives machine instructions as machine readable signals. The term "machine readable signal" refers to any signal used to provide machine instructions and/or data to a programmable processor.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementation of the systems and technologies described herein), or a computing system including any combination of such background component, middleware component or front-end component. The components of the system may be interconnected by any form or medium of digital data communication (such as a communication network). Examples of communication networks include a local area network (LAN), a wide area network (WAN), and the Internet.

The computer system may include a client and a server. The client and the server are typically remote from each other and typically interact through a communication network. The relationship between the client and the server is generated by a computer program running on the corresponding computer and having a client-server relationship with each other. The server may be a cloud server, also known as a cloud computing server or a cloud host, which is a host product in the cloud computing service system and may solve the defects of difficult management and weak service scalability existing in a conventional physical host and a VPS (Virtual Private Server) service. The server may alternatively be a serve of a distributed system, or a server combined with a blockchain.

The flowcharts and block diagrams in the accompanying drawings show architectures, functions and operations that may be implemented according to the systems, methods and computer program products of the various embodiments of the present disclosure. In this regard, each of the blocks in the flowcharts or block diagrams may represent a module, a program segment, or a code portion, the module, program segment, or code portion including one or more executable instructions for implementing specified logic functions. It should also be noted that, in some alternative implementations, the functions denoted by the blocks may occur in a sequence different from the sequences shown in the figures. For example, any two blocks presented in succession may be executed, substantially in parallel, or they may sometimes be in a reverse sequence, depending on the function involved. It should also be noted that each block in the block diagrams and/or flowcharts as well as a combination of blocks in the block diagrams and/or flowcharts may be implemented using a dedicated hardware-based system executing specified functions or operations, or by a combination of a dedicated hardware and computer instructions.

The units or modules involved in the embodiments of the present disclosure may be implemented by means of software or hardware. The described units or modules may also be provided in a processor, for example, described as: a processor, including an acquisition unit, a determination unit, a title generation unit and a tool generation unit, where the names of these units do not in some cases constitute a limitation to such units themselves. For example, the title generation unit may alternatively be described as "a labeling title unit configured to generate a labeling title matching a labeling method type according to a labeling requirement".

In another aspect, the present disclosure further provides a computer readable storage medium. The computer readable storage medium may be a computer readable storage medium included in the apparatus described in the previous embodiments, or a stand-alone computer readable storage medium not assembled into the apparatus. The computer readable storage medium stores one or more programs. The one or more programs, when executed by one or more processors, cause the one or more processor to: acquire to-be-labeled data and a labeling requirement for the to-be-labeled data; determine a labeling method type meeting the labeling requirement, where the labeling method type is a labeling method type used for the to-be-labeled data in order to meet the labeling requirement; generate a labeling title matching the labeling method type according to the labeling requirement, where the labeling title is used to prompt a labeling content in a labeling tool; and determine a title logical relationship of the labeling title to generate the labeling tool including the to-be-labeled data, the labeling title and the title logical relationship.

The above description only provides an explanation of the preferred embodiments of the present disclosure and the technical principles used. It should be appreciated by those skilled in the art that the inventive scope of the present disclosure is not limited to the technical solutions formed by the particular combinations of the above technical features. The inventive scope should also cover other technical solutions formed by any combinations of the above technical features or equivalent features thereof without departing from the concept of the present disclosure, such as technical solutions formed through the above features and technical features having similar functions provided (or not provided) in the present disclosure being replaced with each other.

## Claims

1. A method for labeling data, the method comprising:
acquiring (201) to-be-labeled data and a labeling requirement for the to-be-labeled data;
determining (202) a labeling method type meeting the labeling requirement, wherein the labeling method type is a type of a method for labeling the to-be-labeled data to meet the labeling requirement;
generating (203) a labeling title matching the labeling method type according to the labeling requirement, wherein the labeling title is used to prompt a labeling content in a labeling tool; and
determining (204) a title logical relationship of the labeling title to generate the labeling tool comprising the to-be-labeled data, the labeling title and the title logical relationship.

2. The method according to claim 1, wherein the labeling method type comprises a necessary labeling method type, or the labeling method type comprises the necessary labeling method type and an additional labeling method type.

3. The method according to claim 2, wherein the labeling method type comprises the necessary labeling method type and the additional labeling method type; and the determining a title logical relationship of the labeling title to generate the labeling tool comprising the to-be-labeled data, the labeling title and the title logical relationship, comprises:
determining (405) the title logical relationship of labeling titles respectively corresponding to the necessary labeling method type and the additional labeling method type, wherein the title logical relationship comprises at least one of a labeling order or a display restriction relationship; and
generating the labeling tool comprising the to-be-labeled data, the labeling titles and the title logical relationship.

4. The method according to claim 3, wherein the necessary labeling method type and the additional labeling method type are an extraction type and a cleaning type respectively, and the title logical relationship comprises a labeling order and a display restriction relationship, and the labeling order indicates after a labeling content of the labeling title of the cleaning type is received, a labeling operation of the labeling title of the extraction type is received; and a display process of the labeling tool comprises:
determining, in response to receiving a labeling operation on the labeling title corresponding to the cleaning type in the labeling tool, the labeling content of the labeling operation, and determining a display state of the labeling title corresponding to the extraction type based on the display restriction relationship and the labeling content, wherein the display state is an operable display state or an inoperable display state;
displaying, in response to the determined display state being the operable display state, the labeling title corresponding to the extraction type in an operable state; and
displaying, in response to the determined display state being the inoperable display state, the labeling title corresponding to the extraction type in an inoperable display state, or disabling displaying the labeling title corresponding to the extraction type.

5. The method according to any one of claims 1 to 4, wherein the generating a labeling title matching the labeling method type according to the labeling requirement, comprises:
determining a labeling title type corresponding to the labeling requirement from at least one labeling title type corresponding to the labeling method type as a target title type; and
generating the labeling title of the target title type according to the labeling requirement, wherein generating the labeling title of the target title type according to the labeling requirement, preferably comprises:
generating, in response to the labeling requirement being a preset correction requirement, the labeling title of the target title type and a correction title corresponding to the correction requirement, wherein a labeling content of the correction title is used to adjust the labeling content of the labeling title.

6. The method according to claim 5, wherein the determining a labeling method type meeting the labeling requirement, comprises:
determining, in response to the labeling requirement comprising a to-be-labeled data filtering, that the labeling method type of the to-be-labeled data is the cleaning type, wherein the cleaning type is used to indicate determining whether the to-be-labeled data is data to be filtered out, or to indicate determining partial data to be filtered out in the to-be-labeled data;
determining, in response to the labeling requirement comprising a labeled data transcription, that the labeling method type of the to-be-labeled data is a transcription type;
determining, in response to the labeling requirement comprising a labeled data acquisition, that the labeling method type of the to-be-labeled data is an enrichment type; and
determining, in response to the labeling requirement comprising a labeled data extraction, that the labeling method type of the to-be-labeled data is the extraction type, wherein determining the labeling title type corresponding to the labeling requirement from the at least one labeling title type corresponding to the labeling method type as the target title type, preferably comprises:
acquiring, in response to determining that the labeling method type is a target type, at least two labeling title types corresponding to the labeling method type; and
determining, in response to determining that the labeling requirement is a preset requirement, a title type corresponding to the preset requirement as a target title type.

7. The method according to claim 6, wherein
in response to determining that the target type is the cleaning type and the preset requirement is a direct selection requirement, determining that the target title type is an option selection type, or in response to determining that target type is the cleaning type and the preset requirement is a fuzzy search requirement, determining that the target title type is a drop-down box selection type;
in response to determining that the target type is the transcription type and the preset requirement is a little-content transcription requirement, determining that the target title type is a single-line text title, or in response to determining that the target type is transcription type and the preset requirement is a much-content transcription requirement, determining that the target title type is a multi-line text title; and
in response to determining that the target type is the enrichment type and the preset requirement is a little-content enrichment requirement, determining that the target title type is a single-line text title, or in response to determining that the target type is the enrichment type and the preset requirement is a much-content enrichment requirement, determining that the target title type is a multi-line text title.

8. An apparatus for labeling data, the apparatus comprising:
an acquisition unit, configured to acquire to-be-labeled data and a labeling requirement for the to-be-labeled data;
a determination unit, configured to determine a labeling method type meeting the labeling requirement, wherein the labeling method type is a type of a method for labeling the to-be-labeled data to meet the labeling requirement;
a title generation unit, configured to generate a labeling title matching the labeling method type according to the labeling requirement, wherein the labeling title is used to prompt a labeling content in a labeling tool; and
a tool generation unit, configured to determine a title logical relationship of the labeling title to generate the labeling tool comprising the to-be-labeled data, the labeling title and the title logical relationship.

9. The apparatus according to claim 8, wherein the labeling method type comprises a necessary labeling method type, or the labeling method type comprises the necessary labeling method type and an additional labeling method type.

10. The apparatus according to claim 9, wherein the labeling method type comprises the necessary labeling method type and the additional labeling method type; and
the tool generation unit is further configured to execute the determining a title logical relationship of the labeling title to generate the labeling tool comprising the to-be-labeled data, the labeling title and the title logical relationship by:
determining the title logical relationship of labeling titles respectively corresponding to the necessary labeling method type and the additional labeling method type, wherein the title logical relationship comprises at least one of a labeling order or a display restriction relationship; and
generating the labeling tool comprising the to-be-labeled data, the labeling titles and the title logical relationship.

11. The apparatus according to claim 10, wherein the necessary labeling method type and the additional labeling method type are an extraction type and a cleaning type respectively, and the title logical relationship comprises a labeling order and a display restriction relationship, and the labeling order indicates after a labeling content of the labeling title of the cleaning type is received, a labeling operation of the labeling title of the extraction type is received; and a display process of the labeling tool comprises:
determining, in response to receiving a labeling operation on the labeling title corresponding to the cleaning type in the labeling tool, the labeling content of the labeling operation, and determining a display state of the labeling title corresponding to the extraction type based on the display restriction relationship and the labeling content, wherein the display state is an operable display state or an inoperable display state;
displaying, in response to the determined display state being the operable display state, the labeling title corresponding to the extraction type in an operable state; and
displaying, in response to the determined display state being the inoperable display state, the labeling title corresponding to the extraction type in an inoperable display state, or disabling displaying the labeling title corresponding to the extraction type.

12. The apparatus according to any one of claims 8 to 11, wherein the title generation unit is further configured to execute the generating a labeling title matching the labeling method type according to the labeling requirement by:
determining a labeling title type corresponding to the labeling requirement from at least one labeling title type corresponding to the labeling method type as a target title type; and
generating the labeling title of the target title type according to the labeling requirement, wherein the title generation unit is preferably configured to generate the labeling title of the target title type according to the labeling requirement by:
generating, in response to the labeling requirement being a preset correction requirement, the labeling title of the target title type and a correction title corresponding to the correction requirement, wherein a labeling content of the correction title is used to adjust the labeling content of the labeling title.

13. The apparatus according to claim 12, wherein the determination unit is further configured to execute the determining a labeling method type meeting the labeling requirement by:
determining, in response to the labeling requirement comprising a to-be-labeled data filtering, that the labeling method type of the to-be-labeled data is the cleaning type, wherein the cleaning type is used to indicate whether the to-be-labeled data is data to be filtered out, or to indicate partial data to be filtered out in the to-be-labeled data;
determining, in response to the labeling requirement comprising a labeled data transcription, that the labeling method type of the to-be-labeled data is a transcription type;
determining, in response to the labeling requirement comprising a labeled data acquisition, that the labeling method type of the to-be-labeled data is an enrichment type; and
determining, in response to the labeling requirement comprising a labeled data extraction, that the labeling method type of the to-be-labeled data is the extraction type, wherein the title generation unit is preferably configured to determine the labeling title type corresponding to the labeling requirement from at least one labeling title type corresponding to the labeling method type as the target title type by:
acquiring, in response to determining that the labeling method type is a target type, at least two labeling title types corresponding to the labeling method type; and
determining, in response to determining that the labeling requirement is a preset requirement, a title type corresponding to the preset requirement as a target title type.

14. A non-transitory computer-readable storage medium storing computer instructions, wherein the computer instructions cause a computer to execute the method according to any one of claims 1 to 7.

15. A computer program product comprising a computer program, wherein the computer program, when executed by a processor, implements the method according to any one of claims 1 to 7.
